# EUROPEAN PATENT APPLICATION

(11) **EP 4 614 801 A1**
(43) Date of publication of application: **10.09.2025**
(21) Application number: 24208886.2
(22) Date of filing: 25.10.2024
(51) Int. Cl.: H02P 27/08, H02M 1/12

(54) **OPEN-WINDING MOTOR DRIVE DEVICE**

(30) Priority: 07.03.2024 JP 2024034977
(71) Applicant: Carrier Japan Corporation, Tokyo 141-0032 (JP)
(72) Inventor: SHIBAYAMA, Takeshi, Tokyo (JP); UCHIYAMA, Yoshitaka, Tokyo (JP); KANAMORI, Masaki, Tokyo (JP)
(74) Representative: Gramm, Lins & Partner Patent- und Rechtsanwälte PartGmbB

(57) **Abstract**

An open-winding motor drive device according to an embodiment includes a primary side inverter having three-phase wires that are independent from each other and are connected to three output terminals of a motor having an open-winding structure including six output terminals, a secondary side inverter connected to three remaining output terminals of the motor, a current detecting unit that detects three-phase currents applied to the motor, a current variation detecting unit that outputs a difference between values of the three-phase currents detected twice as a current variation, a magnetic-pole-position estimating unit that estimates a magnetic pole position based on the current variation of the motor, a control unit that controls current to be applied to the motor and a rotating speed, a zero-phase current suppressing unit that suppresses zero-phase current flowing in the same direction through the three-phase wires of the motor via paths between the primary side and secondary side inverters and the motor, and a PWM signal generating unit that compares three-phase duty ratios calculated based on a command voltage and a direct-current voltage acquired from the control unit and the zero-phase current suppressing unit with a carrier and generates three-phase PWM signals of each of the primary side and secondary side inverters. For 64 voltage vectors, which are combinations of ON/OFF patterns of the primary side and secondary side inverters, the PWM signal generating unit divides a hexagonal spatial vector is divided into six sectors, the hexagonal spatial vector having, as its center, a point where two second switching patterns are located and having, as its vertices, points where two first switching patterns are located, the second switching pattern not generating zero-phase voltage and not generating voltage that acts on between the phases of the motor, the first switching pattern not generating zero-phase voltage and generating voltage that acts on between the phases of the motor, and for three-phase duty ratios of the primary side and secondary side inverters of each sector, and shifts the phases by synchronizing between the primary side and the secondary side such that a time is provided for the current variation detecting unit to detect a difference between current values of the three phases twice for each of a maximum, medium and minimum phases classified based on the magnitudes of the duty ratios.

## Description

### BACKGROUND OF THE INVENTION

### Field of the Invention

An embodiment of the present invention relates to an apparatus that estimates a magnetic pole position of a motor having an open-winding structure driven by two inverters based on three-phase currents of the motor.

### Description of the Related Art

In order to properly control a DC brushless motor, which is one of permanent magnet motors using a permanent magnet as a rotor, it has been a practice to detect a magnetic pole position. Detecting a magnetic pole position is equivalent to detecting an electrical angle phase that is a position on electrical angle coordinates of the motor. One way of detecting a magnetic pole position is to use a position sensor such as a rotary encoder, a resolver, and a Hall device. However, from viewpoint of cost and structural constraints, it may not be feasible to provide such a position sensor in some cases. For example, in a case of a motor for a compressor for refrigerating cycles, a position sensor cannot be mounted because the motor is contained within a refrigerant charged space inside the compressor constituted of an airtight container.

Accordingly, techniques are available that estimates a magnetic pole position from current or voltage information without using a position sensor. Such techniques may be of an induced voltage-enabled type and an inductance-enabled type, for example. The induced voltage-enabled type is a technique that calculates an induced voltage in proportion to the speed of the motor from input voltage and current to the motor and estimates a magnetic pole position based on the induced voltage. This technique uses the fact that induced voltage generated by rotation of the motor changes in accordance with the electrical angle of an electric motor that is a magnetic pole position.

It is possible from the induced voltage-enabled type technique to obtain sufficient precision in a high-speed region where the motor has a high rotation speed. However, in a low-speed region where the rotation speed is low, since the induced voltage has a reduced or no amplitude, accurate position estimation cannot be achieved while the motor is stopped or has a low speed.

On the other hand, the inductance-enabled type is a technique that calculates an inductance of a motor from current or voltage information to estimate a magnetic pole position. This technique uses the fact that the inductance of the motor changes in double cycles in accordance with the electrical angle of the motor. Several estimation methods of the inductance-enabled type have been proposed which, for example, applies alternate voltage signals to the motor for sensing not related to a drive frequency and estimates a magnetic pole position from a relationship between voltage and current.

The frequency of the alternate voltage signal to be applied for acquiring an inductance by the method is approximately several 100 Hz to several kHz equal to or lower than the carrier frequency, but, since the current ripple frequency of the motor falls in the human audible range, the noise disadvantageously increases.

In order to address this problem, Japanese Patent Laid-Open No. 2015-126565 increases and/or decreases the duties in both directions of the delay side and the advancing side with reference to any phase of a carrier cycle for one phase of three-phase PWM signals, increases and/or decreases the duty in one direction of the delay side or the advancing side with reference to any phase of the carrier frequency for another one phase, and increases and/or decreases the duty in the opposite direction to the direction above with reference to any phase of the carrier frequency for the remaining one phase so that a high frequency current amplitude is caused, and a magnetic pole position is estimated while suppressing the noise.

According to this technique, each of three-phase currents are detected twice at timing reaching four points fixed within a carrier period, and difference values therebetween are acquired so that an estimated magnetic pole position of the motor is acquired based on the amount of change in current. Therefore, this method has an advantage that an estimated magnetic pole position can be acquired with high precision even in a region with a very low speed including zero speed without depending on the electrical characteristic of the motor that the salient pole ratio is small or the inductance is large, allowing easy application to various motors.

This technology is applicable to a case where one motor is driven by one inverter. However, the technology is not applicable to a case where two inverters drive a motor having an open-winding structure including six winding terminals where three-phase wires are independent from each other.

### BRIEF DESCRIPTION OF THE DRAWINGS

FIG. 1 is a functional block diagram showing a control device of an open-winding motor drive system according to a first embodiment;
FIG. 2 is a diagram showing an open-winding motor drive system;
FIG. 3 is a diagram showing a configuration of an air conditioner;
FIG. 4 is a diagram showing PMW signals of a primary side inverter and a secondary side inverter;
FIG. 5 is a diagram showing three current variations including positional information and ON/OFF patterns for detecting those current variations;
FIG. 6 is a diagram showing current variations acquired through a simulation verification;
FIG. 7 is a diagram showing 64 voltage vectors that can be generated by an open-winding motor drive system;
FIG. 8 is a functional block diagram showing a control device of an open-winding motor drive system according to a second embodiment;
FIG. 9 is a flowchart (#1) for calculating a phase shift amount of a PMW signal;
FIG. 10 is a flowchart (#2) for calculating a phase shift amount of a PMW signal;
FIG. 11 is a flowchart (#3) for calculating a phase shift amount of a PMW signal;
FIG. 12 is a diagram showing a PMW signal of the second embodiment which can suppress a zero-phase current of a carrier component and from which a current variation can be detected;
FIG. 13 is an enlarged view of FIG. 12 for a sector 0;
FIG. 14 is a diagram showing PMW signals of a primary side inverter and a secondary side inverter;
FIG. 15 is a diagram showing current variations acquired through a simulation verification without actuating a zero-phase current suppressing unit according to a second embodiment;
FIG. 16 is a diagram showing current variations acquired through a simulation verification by actuating the zero-phase current suppressing unit according to the second embodiment;
FIG. 17 is a diagram showing zero-phase voltage and zero-phase current of a carrier frequency component with the PWM signal of the first embodiment;
FIG. 18 is a diagram showing conventional PMW signal generation and spatial vector modulation that suppresses zero-phase current of a carrier component;
FIG. 19 is a diagram showing an open-winding motor drive system according to a third embodiment;
FIG. 20 is a functional block diagram showing a control device of the open-winding motor drive system;

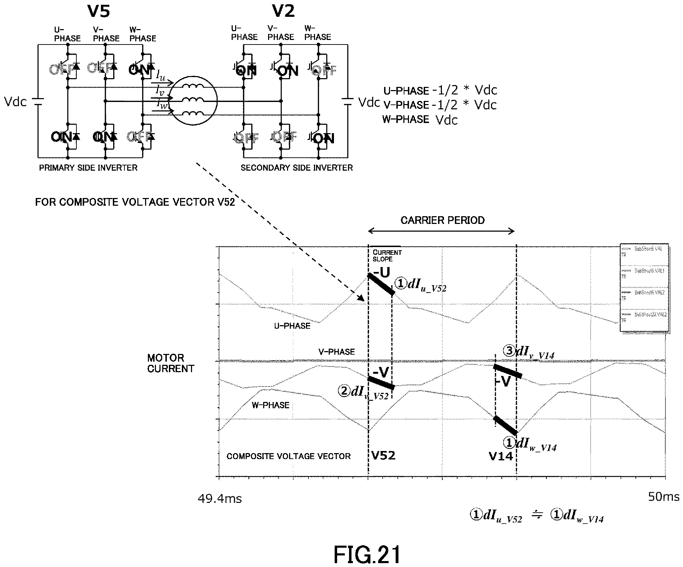

FIG. 21 is a diagram showing three current variations including positional information and ON/OFF patterns for detecting those current variations;
FIG. 22 is a diagram showing PMW signals of a primary side inverter and a secondary side inverter;
FIG. 23 is a diagram showing current variations acquired through a simulation verification on the third embodiment;
FIG. 24 is a diagram showing Equations (1) and (2); and
FIG. 25 is a diagram showing Equations (3) to (5).

### DETAILED DESCRIPTION OF THE EMBODIMENT

Accordingly, there is provided an open-winding motor drive device which can generate three-phase PWM signals with two inverters such that three-phase current variations required for estimation of a magnetic pole position can be securely detected within a carrier period in a motor having an open-winding structure.

An open-winding motor drive device of an embodiment includes a primary side inverter having three-phase wires that are independent from each other and are connected to three output terminals of a motor having an open-winding structure including six output terminals;
a secondary side inverter connected to three remaining output terminals of the motor;
a current detecting unit that detects three-phase currents applied to the motor;
a current variation detecting unit that outputs a difference between values of the three-phase currents detected twice as a current variation;
a magnetic-pole-position estimating unit that estimates a magnetic pole position based on the current variation of the motor;
a control unit that controls current to be applied to the motor and a rotating speed;
a zero-phase current suppressing unit that suppresses zero-phase current flowing in the same direction through the three-phase wires of the motor via paths between the primary side and secondary side inverters and the motor; and
a PWM signal generating unit that compares three-phase duty ratios calculated based on a command voltage and a direct-current voltage acquired from the control unit and the zero-phase current suppressing unit with a carrier and generates three-phase PWM signals of each of the primary side and secondary side inverters,
wherein for 64 voltage vectors, which are combinations of ON/OFF patterns of the primary side and secondary side inverters, the PWM signal generating unit divides a hexagonal spatial vector into six sectors, the hexagonal spatial vector having, as its center, a point where two second switching patterns are located and having, as its vertices, points where two first switching patterns are located, the second switching pattern not generating zero-phase voltage and not generating voltage that acts on between the phases of the motor, the first switching pattern not generating zero-phase voltage and generating voltage that acts on between the phases of the motor, and
for three-phase duty ratios of the primary side and secondary side inverters of each sector, shifts the phases by synchronizing between the primary side and the secondary side such that a time is provided for the current variation detecting unit to detect a difference between current values of the three phases twice for each of a maximum, medium and minimum phases classified based on the magnitudes of the duty ratios.

Also, an open-winding motor drive device of an embodiment similarly includes a configuration including from the primary side inverter to the PWM signal generating unit except for the zero-phase current suppressing unit, and
the PWM signal generating unit increases and decreases, for a first phase of the three-phase PWM signals of the primary side inverter, its pulse width in both directions of a delay side and an advancing side with reference to a center or front or rear end of a carrier period,
for a second phase, increases and decreases its pulse width in one direction of a delay side or an advancing side with reference to the front or rear end of the carrier period,
for a third phase, increases and decreases its pulse width in opposite one direction with reference to the opposite phase to the second phase,
for a first phase of three-phase PWM signals of the secondary side inverter, increases and decreases its pulse width in both directions of a delay side and an advancing side with reference to a phase different from a first phase of the primary side inverter, and
for a second phase and a third phase, increase and decrease their pulse widths in opposite directions with reference to the same phase as the second phase and the third phase of the primary side inverter, respectively, and
the current variation detecting unit detects twice a difference between three-phase or two-phase current values near a front end and a rear end of a carrier period.

### [First Embodiment]

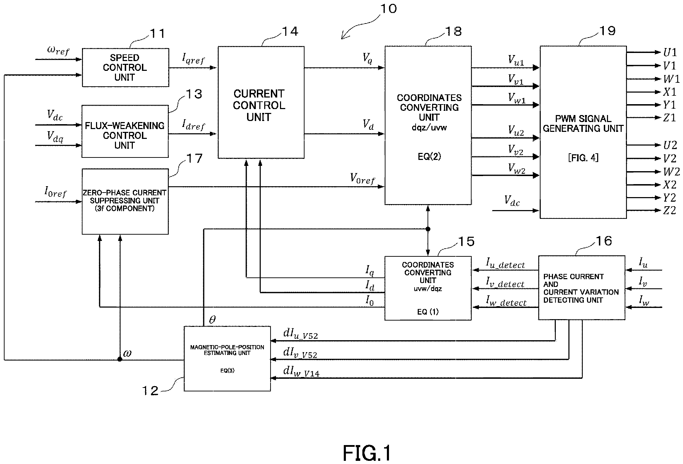

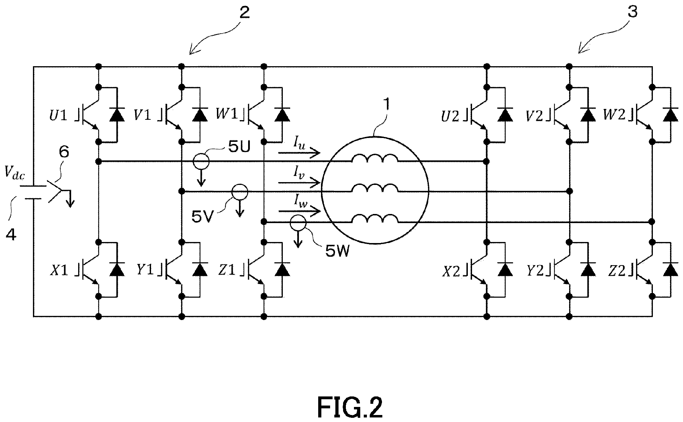

A first embodiment is described hereinafter with reference to FIGS. 1 to 7. FIG. 2 is a diagram showing a configuration of a motor drive system according to an embodiment. A motor 1 is a three-phase permanent magnet synchronous motor, for example, and has three-phase winding wires which are not connected to each other with both terminals thereof in an open state. In other words, the motor 1 includes six winding terminals.

A primary side inverter 2 and a secondary side inverter 3 are constituted of three-phase bridge connections of IGBT_U, V, W and X, Y, Z, each of which is switching element and which are connected in parallel with a direct-current power supply 4. The direct-current power supply 4 may be acquired by converting alternating-current power supply to direct current. Phase output terminal of the primary side inverter 2 are connected to winding terminals of one side of the motor 1, respectively, and phase output terminals of the secondary side inverter 3 are connected to winding terminals of another side. It should be noted that, according to this embodiment, since the primary side inverter 2 and the secondary side inverter3 are configured to share a direct-current link, zero-phase current flows through the three-phase winding wires of the motor 1 in the same direction. This zero-phase current is divided into a low-frequency current flowing with a component three times that of the fundamental frequency of the phase current applied to the motor 1 and current with a carrier frequency component flowing by switching over the inverters 2 and 3 on the primary side and the secondary side.

Current sensors 5U, 5V and 5W are sensors that detect phase currents Iu, Iv, and IW of the motor 1 and correspond to the current detecting unit. A voltage sensor 6 detects voltage Vdc of a direct-current power supply. The control device 10 shown in FIG. 1 generates a switching signal to a gate of each IGBT included in the primary side and secondary side inverters 2 and 3 based on phase currents Iu, Iv, and IW detected by the current sensors 5U, 5W and 5W and the direct current voltage Vdc detected by the voltage sensor 6. The control device 10 corresponds to the control unit.

A speed control unit 11 included in the control device 10 performs, for example, a proportional integral (PI) calculation of a difference between a speed command ωref input from the control device that is higher in the system and drives the motor 1 and a motor speed ω estimated by the magnetic-pole-position estimating unit 12 to generate and output a q-axis current command Iqref such that the speed command ωref and the motor speed ω can be matched. For a direct-current voltage Vdc and a voltage amplitude Vdq of the dq axis, a flux-weakening control unit 13 similarly performs, for example, a PI calculation for a difference between the direct-current voltage Vdc and the voltage amplitude Vdq of the dq axis to generate and output a d-axis current command Idref.

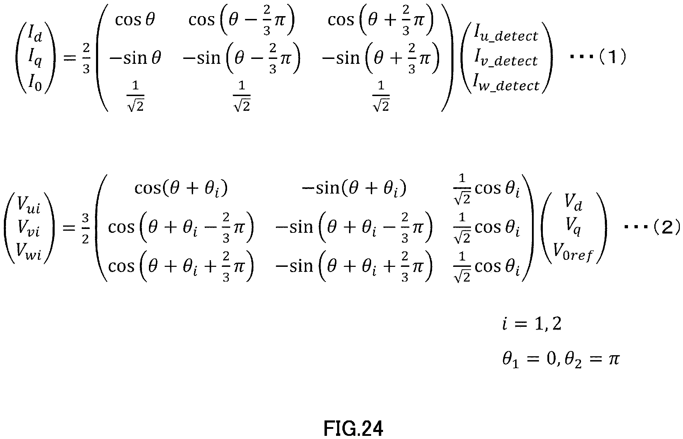

A current control unit 14 performs, for example, a PI calculation for a difference between an input q-axis current command Iqref and d-axis current command Idref and currents Id, Iq detected by the coordinates converting unit (uvw/dqz) 15 to generate and output d-, q-axis voltage commands Vd, Vq. Based on a magnetic pole position θ estimated by the magnetic-pole-position estimating unit 12, the coordinates converting unit (uvw/dqz) 15 converts phase currents Iu_detect, Iv_detect and IW_detect detected by a phase current and current variation detecting unit 16 through the current sensor 5 to currents Id, Iq of the d-, q-axis coordinates to be employed for vector control and zero-phase current I0 according to Equation (1) shown in FIG. 24.

From a zero-phase current command I0ref that is commonly zero and zero-phase current I0 input from the coordinates converting unit (uvw/dqz) 15 and the motor speed ω input from the magnetic-pole-position estimating unit 12, the zero-phase current suppressing unit 17 generates and outputs a zero-phase voltage command VOref by, for example, proportional resonance control. The proportional resonance control controls for increasing the responsiveness to the triple component of a fundamental frequency of motor phase current and suppresses zero-phase current of the triple component.

Based on the magnetic pole position θ, the coordinates converting unit (dqz/uvw) 18 converts d-, q- axis voltage commands Vd, Vq and the zero-phase voltage command VOref to three-phase voltage commands Vu1, Vv1, Vw1, and Vu2, Vv2, Vw2 of the primary side and secondary side inverters 2 and 3 according to Equation (2) shown in FIG. 24. The three-phase voltage commands of the primary side and the secondary side have a phase difference of 180 degrees from each other.

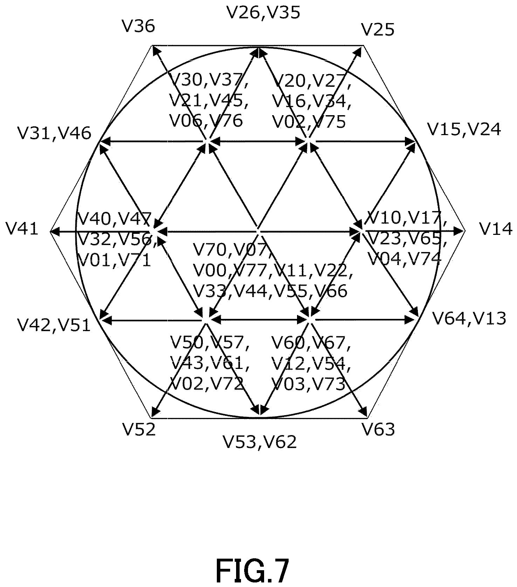

According to a principle which is described later, based on three current variations dIu_V52, dIv_V52, and dIw_V14 having a phase difference of 120 degrees from each other detected by the phase current and current variation detecting unit 16, the magnetic-pole-position estimating unit 12 estimates a motor speed ω and a magnetic pole position θ of the rotor. It should be noted that V52 and V14 are composite voltage vector of the primary side inverter 2 and the secondary side inverter 3, FIG. 7 shows a voltage vector of 8 × 8 = 64 that can be output by two inverters in the open-winding motor drive system. For example, a combination for achieving a vector V1 on the primary side inverter 2 and a vector V4 of the secondary side inverter 3 is labeled as vector V14. The magnetic pole position θ is input to the coordinates converting unit (uvw/dqz) 15 and the coordinates converting unit (dqz/uvw) 18.

Based on the three-phase voltage commands Vu1, Vv1, Vw1 and Vu2, Vv2, Vw2 and direct-current voltage Vdc of the primary side and secondary side inverters 2 and 3, the PWM signal generating unit 19 determines a duty ratio that is a proportion of the pulse width of a PMW signal of each phase. Based on those duty ratios, three-phase high side and low side PMW signals U1, V1, W1, X1, Y1, Z1 and U2, V2, W2, X2, Y2, Z2 of the primary side and secondary side inverters 2 and 3 are generated, and a gate drive signal is output to the primary side and secondary side inverters 2 and 3. Based on the supplied direct-current power supply 4 and the given gate drive signals, the primary side and secondary side inverters 2 and 3 cause the primary side and the secondary side to generate three-phase alternating-current voltage for driving the motor 1 and apply it to the winding terminal of the motor 1. Details of the configuration of the PWM signal generating unit 19 are described below.

The current sensor 5 detects three-phase currents flowing through the motor 1 and outputs a signal based on the detection result and may employ a current transformer (CT), for example. The phase current and current variation detecting unit 16 performs A/D conversion and detects the three-phase current signals output from the current sensor 5 at four fixed times at the front end and rear end of the PWM carrier period. This phase-current detection processing is described in detail later.

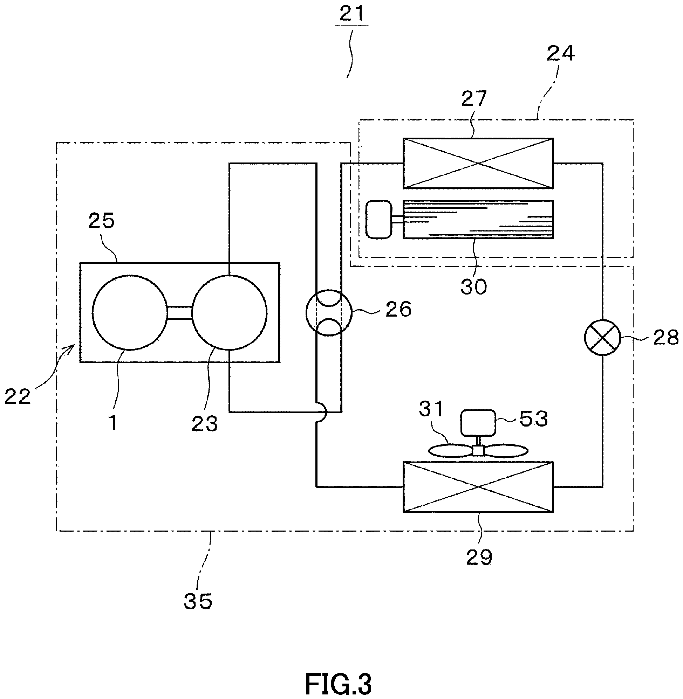

FIG. 3 is a diagram showing an air conditioner that is a heat pump type apparatus to which the motor drive system according to this embodiment is applied. It should be noted that the heat pump type apparatus to which the motor drive system is applied may be a hot water generator that is a water heater, a cold-water generator such as a chiller or the like instead of an air conditioner. The air conditioner 21 includes an indoor unit 24, an outdoor unit 35, and a refrigerant pipes and signal communication line that connect those units. The indoor unit 24 installed indoors internally accommodates an interior side heat exchanger 27 and an indoor fan 30. On the other hand, the outdoor unit 35 is placed outdoors and accommodates devices such as a control unit 20, a compressor 22, exterior side heat exchanger 29, a four-way valve 26, decompression device 28, an outdoor fan 31, and an outdoor fan motor 53.

The compressor 22 includes a compressing unit 23 and the motor 10 accommodated within the same metallic sealed container 25, and the motor 10 has a rotor shaft linked to the compressing unit 23. Also, the compressor 22, the four-way valve 26, the interior side heat exchanger 27, the decompression device 28, and the exterior side heat exchanger 29 are connected such that a closed-loop is constituted of a pipe serving as a refrigerant passage. It should be noted that while the compressor 22 is a one-cylinder rotary compressor, for example, it may be, without limiting thereto, a multi-cylinder rotary compressor, a scroll-type compressor, or a reciprocating compressor.

In heating, the four-way valve 26 has a state indicated by the solid line, and the high-temperature refrigerant compressed by the compressing unit 23 in the compressor 22 is supplied from the four-way valve 26 to the interior side heat exchanger 27, is condensed, and emits heat indoors to heat the indoor environment. Then, the refrigerant is decompressed by the decompression device 28 to have a low temperature, which then flows through the exterior side heat exchanger 29 and absorbs heat from the external air so that it evaporates therein and returns to the compressor 22.

In cooling, on the other hand, the four-way valve 26 is changed to the state indicated by the broken line. Thus, the high-temperature refrigerant compressed by the compressing unit 23 in the compressor 22 is supplied from the four-way valve 26 to the exterior side heat exchanger 29, radiates heat outdoors and condenses. Then, the refrigerant is decompressed by the decompression device 28 to have a low temperature, which then flows through the interior side heat exchanger 27 and absorbs heat from the internal air so that it evaporates therein, cools the indoor and returns to the compressor 22. Then, it is configured such that air is sent to the interior side and exterior side heat exchangers 27, 29 by the indoor fan 30 and outdoor fan 31, respectively, and, with the sent air, heat exchange can be efficiently performed between the heat exchangers 27, 29 and the indoor air and outdoor air, respectively.

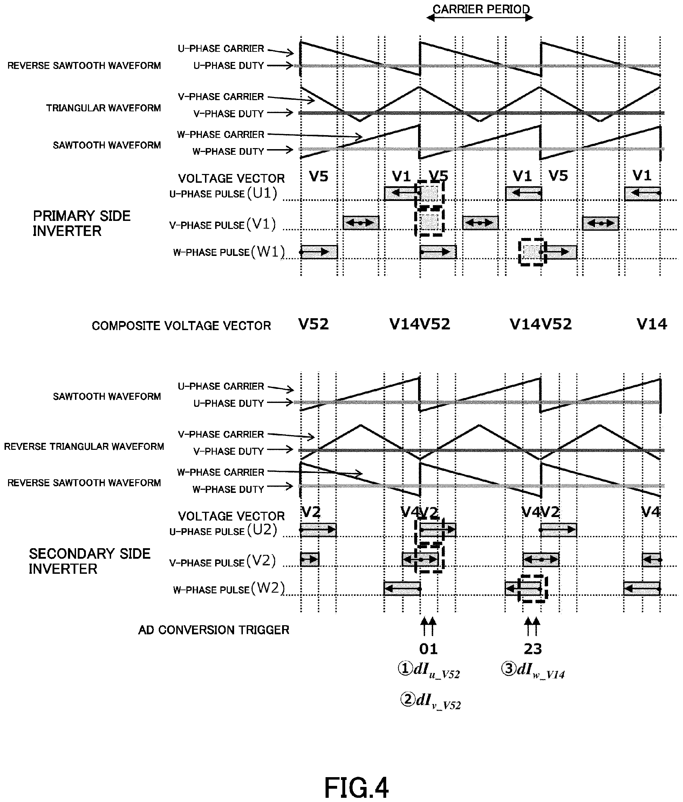

According to this embodiment, the PWM signal generating unit 19 generates a high-frequency current ripple from which a magnetic pole position can be detected, as shown in FIG. 4. The upper side of FIG. 4 shows carrier waveforms and PMW signals of phases of the primary side inverter 2, and the lower side shows carrier waveforms and PMW signals of phases of the secondary side inverter 3. Note that the primary side and secondary side inverters 2 and 3 may be called dual inverters below.

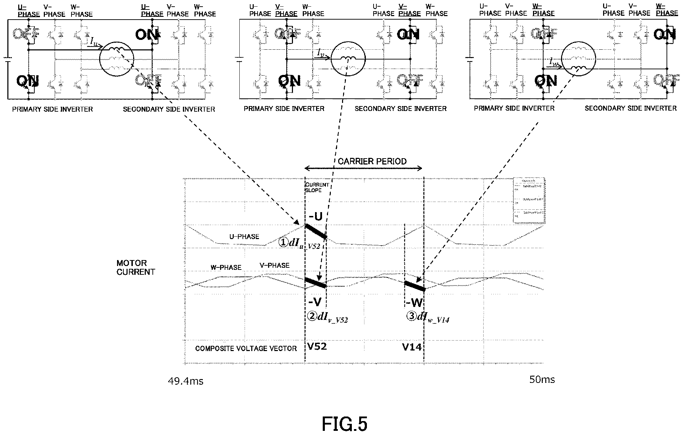

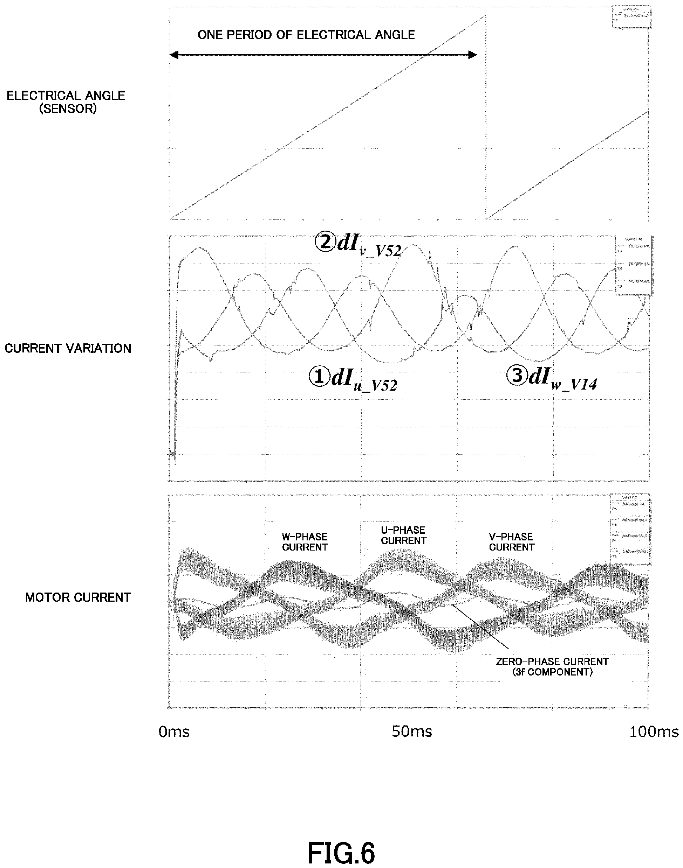

First, in the open-winding motor drive system, an ON/OFF pattern of the dual inverter from which a magnetic pole position can be detected is described with reference to FIG. 5. The lower side of FIG. 5 shows three-phase motor currents at a certain time, around a time of 50 ms shown in FIG. 6 in a carrier period while the motor 1 is being driven by the PWM signal generating unit 19. The upper side of FIG. 5 shows an ON/OFF pattern of the dual inverter corresponding to a motor current ripple at a composite voltage vector V52 or V14 of the dual inverters.

The open-winding motor 1 has three-phase winding wires independent from each other, and an ON/OFF pattern as shown in FIG. 5 is generated for each of the phase winding wires so that a high-frequency current ripple can be acquired from which a magnetic pole position can be detected. For example, focusing on the U-phase, a pattern is produced in which the high side PMW signal of the primary side inverter 2 is OFF and the high side PMW signal of the secondary side inverter 3 is ON. According to this pattern, assuming that the direction that the current flows from the primary side inverter 2 to the secondary side inverter 3 is positive, the slope of the current decreases toward the negative side. FIG. 4 shows patterns of three-phase PMW signals in which the ON/OFF pattern in which the slope of the current decreases toward the negative side can be generated also in the V-phase and the W-phase within a carrier period. It should be noted that a pattern may be generated in which the high side PMW signal of the primary side inverter 2 is ON and the high side PMW signal of the secondary side inverter 3 is OFF so that the slope of the current increases toward the positive side. The following description refers to a pattern in which the slope of the current decreases toward the negative side.

As shown in FIG. 4, in order to generate the ON/OFF pattern shown in FIG. 5 for three phases within a carrier period, the U-phase carrier of the primary side inverter 2 has a reverse sawtooth waveform, the V-phase carrier has a triangular waveform, and the W-phase carrier has a sawtooth waveform. Also, the secondary side inverter 3 produces carriers having a phase relationship opposite to each of the phase carriers of the primary side inverter 2. In this way, by changing the base point of a PMW signal of each of the phases and the direction of the increase and decrease of the signal pulses based on the duty ratios, composite voltage vectors V52 and V14 are generated on the front-end side and rear-end side of the carrier period.

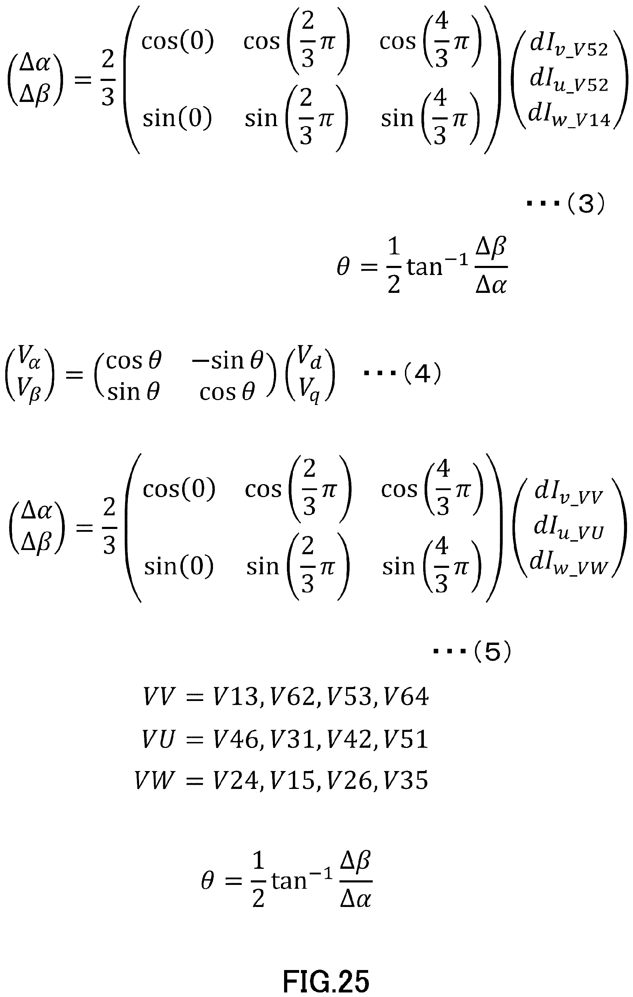

Here, focusing on the part surrounded by the broken line, the U-phase and V-phase of the vector V52 and the W-phase of the vector V14 have the ON/OFF pattern shown in FIG. 5. Thus, in these vectors V52, V14, A/D conversion triggers of 0 to 3 which are current detection times shown in FIG. 4 are set to detect the three-phase current signals output from the current sensor 5 four times within a carrier period. Through this, three current variations of dIu_V52, dIv_V52 and dIW_V14 are acquired from which a magnetic pole position can be detected. Also, for three-phase motor currents to be used for vector control, any one of the four detection values is employed. A magnetic pole position θ is estimated by Equation (3) shown in FIG. 25.

The magnetic pole position θ estimated by Equation (3) is a division from 2Θ and has an error of ±180 degrees in principle. Therefore, in order to determine the error at a stopped state before motor driven, an algorithm for identifying the initial position is needed. For this, the determination is made by a method employing a magnetic saturation property, which is a conventional publicly-known technology. The publicly-known technology may be a technique as in the following literature, for example:

The transactions of the Institute of Electrical Engineers of Japan. D, A publication of Industry Applications Society, Vol. 125, 2005, No. 3, "A Method for Estimating Initial Pole Position of Surface Permanent Magnet Synchronous Motors Using Pulse Voltage", Osamu Yamamoto, Takahiro Ara.

Also, an estimated speed ω is acquired by time-differentiating the estimated position by a control period.

FIG. 6 shows current variations, motor current and zero-phase current against an electrical angle acquired through a simulation verification performed on this embodiment. A current variation having a component of 2Θ against the electrical angle is acquired, and it can be seen that a magnetic pole position can be estimated therefrom. Note that, while the simulation verification targets the control device 10 shown in FIG. 1, the simulation verification is performed for the purpose of checking whether a current variation can be acquired from a detected current signal, and the speed and angle are detected by a position sensor. Therefore, no feedback control with the estimated value acquired by the magnetic-pole-position estimating unit 12 is performed. Also, the zero-phase current suppressing unit 17 which suppresses the zero-phase current of the 3f component shown in FIG. 4 is not operated, and the zero-phase current command VOref is zero.

In this way, according to this embodiment, when the motor 1 having an open-winding structure is driven by the primary side inverter 2 and the secondary side inverter 3, the control device 10 detects each of phase currents Iu_detect, Iv_detect and IW_detect applied to the motor 1 by the current sensor 5 and the phase-current and current variation detecting unit 16. Also, the current variation detecting unit 16 calculates a difference between current values of each phase which are detected twice and outputs the result as current variations of dIu_V52, dIv_V52 and dIW_V14. The magnetic-pole-position estimating unit 12 estimates a magnetic pole position θ of the motor 1 based on the current variations.

The speed control unit 11 and the current control unit 14 control the current to be applied to the motor 1 and the rotating speed, and the PWM signal generating unit 19 compares three-phase duty ratios calculated based on voltage commands Vu1, Vv1, Vw1 and Vu2, Vv2, Vw2 acquired through the coordinates converting unit 18 from the current control unit 14 and direct-current voltage Vdc with a carrier and generates three-phase PMW signals of each of the primary side and secondary side inverters 2 and 3.

The PWM signal generating unit 19 increases and decreases the pulse width of the V-phase of the primary side inverter 2 in both directions of the delay side and advancing side with reference to the center phase of the carrier period, increases and decreases the pulse width of the U-phase in the delay direction with reference to the phase of the rear end of the carrier period, and increases and decreases the pulse width of the W-phase in the advancing direction with reference to the phase of the front end of the carrier period. The secondary side inverter 3 increases and decreases the pulse width of the V-phase in both directions of the delay side and advancing side with reference to the front-end phase of the carrier period, increases and decreases the pulse width of the U-phase in the advancing direction with reference to the rear end phase of the carrier period, and increases and decreases the pulse width of the W-phase in the delay direction with reference to the front-end phase of the carrier period. Then, the current variation detecting unit 16 detects twice a difference between three-phase current values near the front end and the rear end of the carrier period.

According to this configuration, three-phase PWM signals of the two inverters 2 and 3 can be generated such that three-phase currents required for estimation of a magnetic pole position θ can be surely detected within a carrier period in PWM control.

### [Second Embodiment]

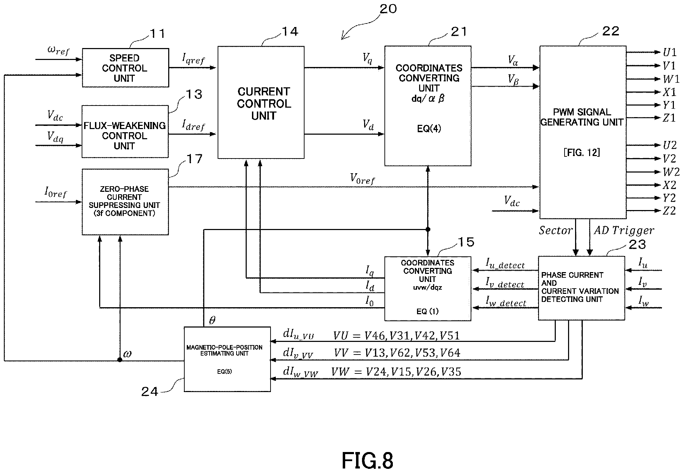

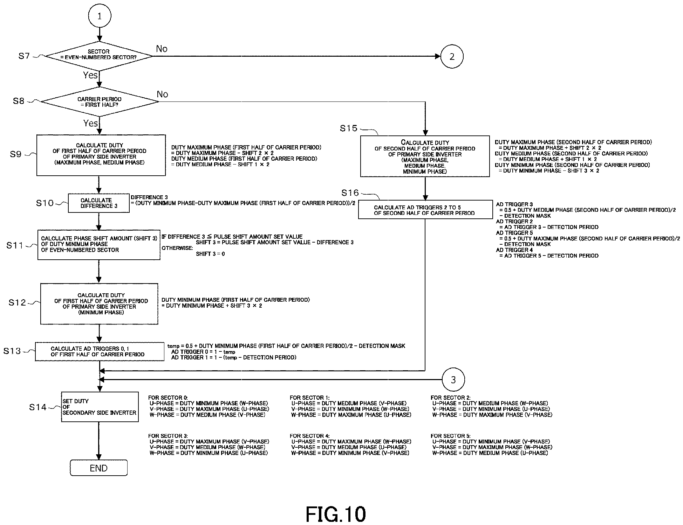

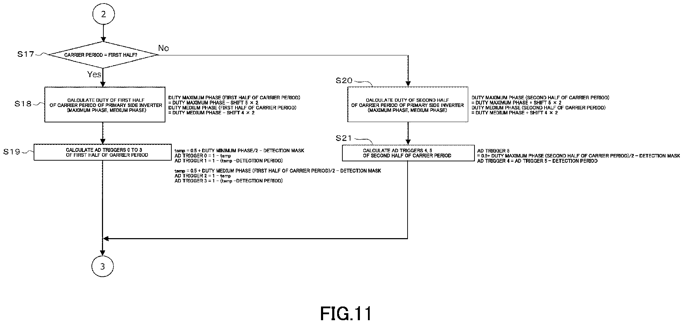

Hereinafter, like references are given to like parts between the first embodiment and the second embodiment, and repetitive description is omitted while different parts are described. The second embodiment is described with reference to FIG. 8 to FIG. 18. In a motor drive system having a direct-current link shared open-winding structure, common-mode voltage of the primary side and secondary side inverters, that is, zero-phase voltage which is a difference between average values of the three-phase output voltages occurs with a PMW signal which generates harmonic current amplitudes necessary for magnetic pole position estimation. With this zero-phase voltage, since zero-phase current flows in the same direction through the three-phase winding wires of the motor 1 via a path refluxing the dual inverters and the motor 1, the precision of the position estimation decreases.

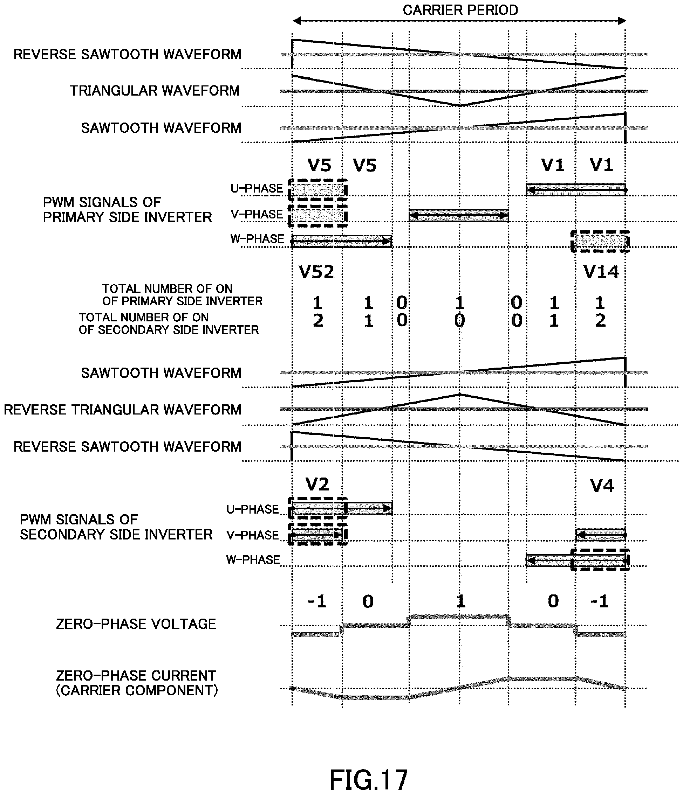

FIG. 17 shows zero-phase voltage and zero-phase current of a carrier frequency component with the PWM signal of the first embodiment. The zero-phase voltage depends on the total number of ON of the primary side inverter and the total number of ON of the secondary side inverter and occurs positively and negatively when the total number of ON is different from each other. Therefore, the waveform of the zero-phase voltage shown in FIG. 17 varies positively and negatively in accordance with the switching state, the zero-phase current increases during a period that it occurs on the positive side, and the zero-phase current decreases during a period that it occurs on the negative side. Since this zero-phase current of the carrier component acts as a disturbance on the current variation of the motor phase current, which is positional information, it must be suppressed.

As the method for suppressing zero-phase current of the carrier component, a technique that can suppress the carrier component and zero-phase current of the 3f component at the same time by using a triangular wave only to the three-phase carriers, for example is disclosed in Japanese Patent Laid-Open No. 2022-173520, for example. Hereinafter, this publication is called reference publication.

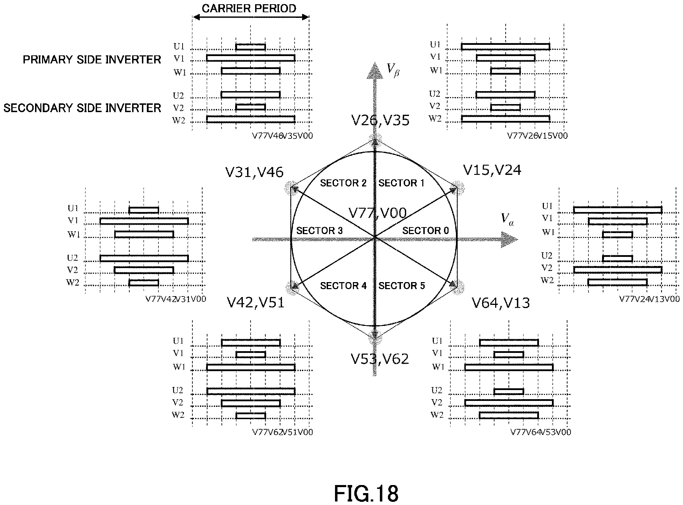

FIG. 18 shows conventional PMW signal generation and spatial vector modulation that suppresses zero-phase current of a carrier component. The dq-axis voltage is converted to αβ-axis voltage by Equation (4) shown in FIG. 25, the time of occurrence of a voltage vector of each sector is determined from the αβ-axis voltage, and the PMW signal is output.

Among voltage vectors of 64 patterns shown in FIG. 7, the voltage vector which causes motor applying voltage and which does not cause zero-phase voltage, that is, which has a total number of ON that is equal between the primary side and secondary side inverters 2 and 3 have 12 patterns of V15, V24, V26, V35, V31, V46, V42, V51, V64, and V13. They correspond to the first switching pattern. A regular hexagon which has vertices pairing two of the voltage vectors of the 12 patterns is drawn about the voltage vectors V00, V77 corresponding to the second switching pattern to be divided into six sectors. This is shown in FIG. 18. Since the total number of ON of the primary side inverter 2 and the total number of ON of the secondary side inverter 3 are equal, the zero-phase voltage is zero, which suppresses the ripple of the zero-phase current of the carrier component.

However, according to the technique in the reference publication, although the zero-phase current of a carrier component can be suppressed, the ON/OFF pattern from which a magnetic pole position shown in FIG. 5 can be detected is not acquired. Accordingly, in the second embodiment, the zero-phase current of a carrier component is suppressed within a carrier period in PWM control and at the same time a PMW signal is generated from which the ON/OFF pattern shown in FIG. 5 necessary for estimation of a magnetic pole position is acquired and from which variations of three-phase currents can be detected.

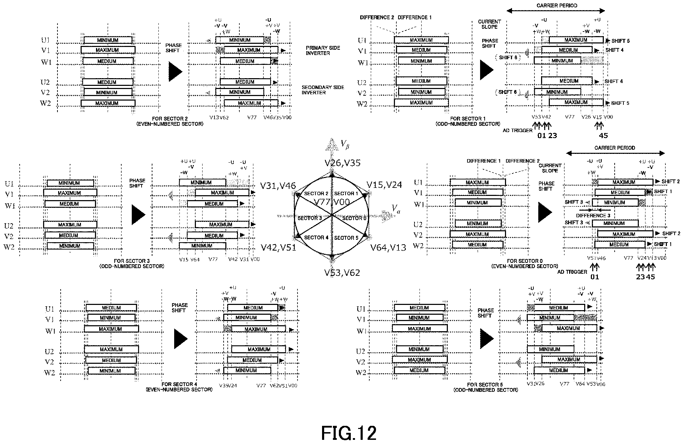

A control device 20 of the second embodiment shown in FIG. 8 is different from the control device 10 of the first embodiment in the following points.
- the coordinates converting unit (dqz/uvw) 18 is replaced by a coordinates converting unit (dq/αβ) 21. The coordinates converting unit (dq/αβ) 21 does not receive input of a zero-phase voltage command VOref which suppresses a 3f component three times of the carrier frequency.
- The PWM signal generating unit 19 is replaced by the PWM signal generating unit 22. The PWM signal generating unit 22 employs the method shown in FIG. 12 instead of Equation (1) shown in FIG. 4. With this, a zero-phase voltage command VOref is input.
- The phase current and current variation detecting unit 16 is replaced by a phase current and current variation detecting unit 23. Sector information from the PWM signal generating unit 22 and information on A/D conversion triggers 0 to 5 are input to the phase current and current variation detecting unit 23. Note that the method for reflecting the zero-axis voltage command VOref to the PMW signal is described in the reference publication.
- The magnetic-pole-position estimating unit 12 is replaced by a magnetic-pole-position estimating unit 24.

With the phase current and current variation detecting unit 23, the relationship between the A/D conversion triggers 0 to 5 and a current phase to be detected varies in accordance with the sector. Therefore, the phase current to be input to the coordinates converting unit (dq/αβ) 21 and the current variation to be input to the magnetic-pole-position estimating unit 24 are required to be sorted based on the sector.

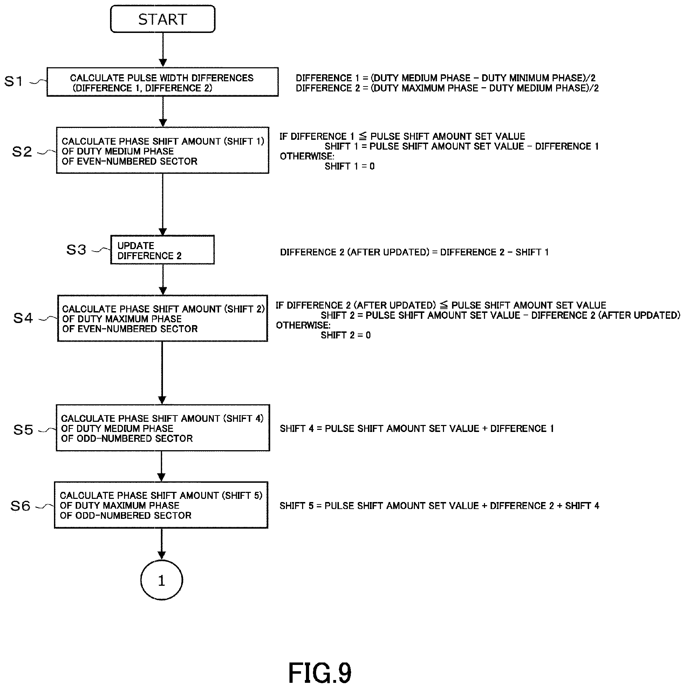

FIG. 12 shows the three-phase PWM signals of a dual inverter according to the sector. On the left side, the phase of the PWM signal is shifted by the conventional method shown in FIG. 18, and on the right side, the phase of the PWM signal is shifted by the method described below based on the conventional method. The phase-shifting methods can be categorized based on even-numbered sectors and odd-numbered sectors, and specific processing methods follows the flowcharts shown in FIGs. 9 to 11.

These flowcharts are started after PMW signals are acquired by spatial vector modulation without occurrence of zero-phase voltage by the conventional method. In other words, it is after d-axis voltage Vd and q-axis voltage Vq are calculated under vector control, and three-phase duty ratios of the primary side and secondary side inverters 2 and 3 are calculated by the conventional technique which suppresses zero-phase current having a carrier component shown in FIG. 17. Then, this flowchart shows phase shift processing on the primary-side PWM signal, a method for setting the A/D conversion triggers 0 to 5 depending on the duty, and a method for setting the secondary-side PWM signal.

First, a difference 1 between an medium phase and a minimum phase of the PMW signal and a difference 2 between a maximum phase and the medium phase are acquired (S1). Based on the difference 1 and difference 2 and a set value for the section for detecting a current variation, a shift 1 of the medium phase of the even -number sector is calculated as a phase shift amount toward the right side (S2), and then, the shift 1 is subtracted from the difference 2 to update the difference 2 (S3). Then, a shift 2 of the maximum phase of the even-numbered sector (S4), a shift 4 of the medium phase of the odd-numbered sector (S5), and a shift 5 of the maximum phase are each calculated (S6).

For an even-numbered sector, for example, for sector 0, (Yes in S7), in the first half of the carrier period (Yes in S8), phase shift processing is performed toward the maximum phase and the right side of the medium phase based on the shift 2 and the shift 1 to generate V13 and V24 (S9). Next, a difference 3 between the minimum phase and the maximum phase after the phase shift is acquired (S10), and, based on it and the set value for the section for detecting a current variation, a shift 3 is calculated as a phase shift amount toward the left side (S11). Finally, based on the shift 3, phase shift processing toward the left side of the minimum phase is performed as required to generate V51 and V46 (S12). The A/D conversion triggers 0, 1 of the first half of the carrier period are calculated based on the minimum phase after the phase shift (S13).

In the second half of the carrier period (No in S8), based on the shift 2 and the shift 1 and the shift 3 calculated in the first half of the carrier period, phase shift processing toward the right side is performed on the maximum phase and the medium phase, and phase shift processing toward the left side is performed on the minimum phase as required (S15). Then, the A/D conversion triggers 2 to 5 of the second half of the carrier period are calculated based on the medium phase and the maximum phase after the phase shift (S16).

For an odd-numbered sector, for example, for sector 1, (No in S7), in the first half of the carrier period (Yes in S17), phase shift processing is performed toward the maximum phase and the right side of the medium phase based on the shift 5 and the shift 4 to generate V42 and V53 (S18). The A/D conversion triggers 0 to 3 of the first half of the carrier period are calculated based on the minimum phase and the medium phase after the phase shift (S19). Similarly in the second half of the carrier period (No in S17), phase shift processing is performed toward the maximum phase and the right side of the medium phase based on the shift 5 and the shift 4 to generate V26 and V15 (S20). Then, the A/D conversion triggers 4 to 5 of the second half of the carrier period are calculated based on the maximum phase after the phase shift (S21).

Up to this point, the phase shift processing on the PWM signals of the primary side inverter 2 and the setting of the A/D conversion triggers 0 to 5 based on the duty ratios has completed. Finally, the PMW signals of the primary side inverter having completely undergone the phase shift processing may be assigned to the PMW signals of the secondary side inverter based on the sectors (S14). Thus, for three-phase PWM signals of the primary side and secondary side inverters 2 and 3, the phases are shifted such that a time can be provided for detecting a current variation in synchronization with each of a maximum, medium and minimum phases classified based on their magnitudes.

Also, since the phase shift amount in an odd-numbered sector in which the maximum phase and the medium phase are phase-shifted toward the right side is larger than that of an even-numbered sector, not shown in the flowchart, all of the three phases may be phase-shifted toward the left side eventually if the PMW signals after phase-shifted do not fit within the carrier period. This is shown as shift 6 in FIG. 12. Thus, in the open-winding motor drive system, PMW signals resulting in a current variation from which a magnetic pole position can be detected are generated while zero-phase current with zero-phase voltage is suppressed.

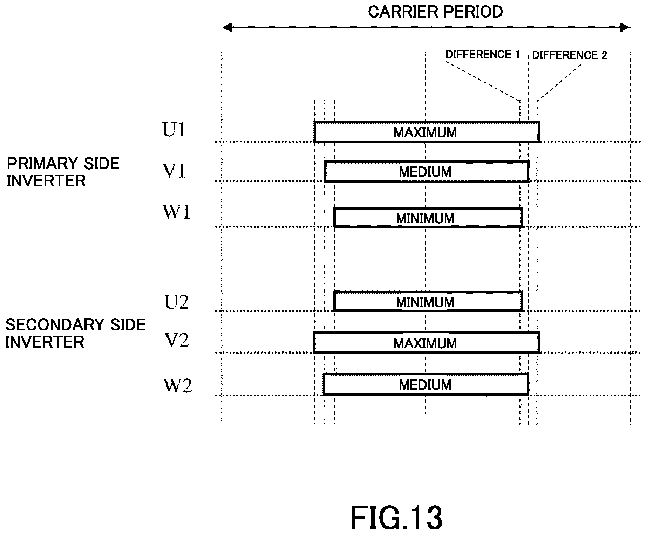

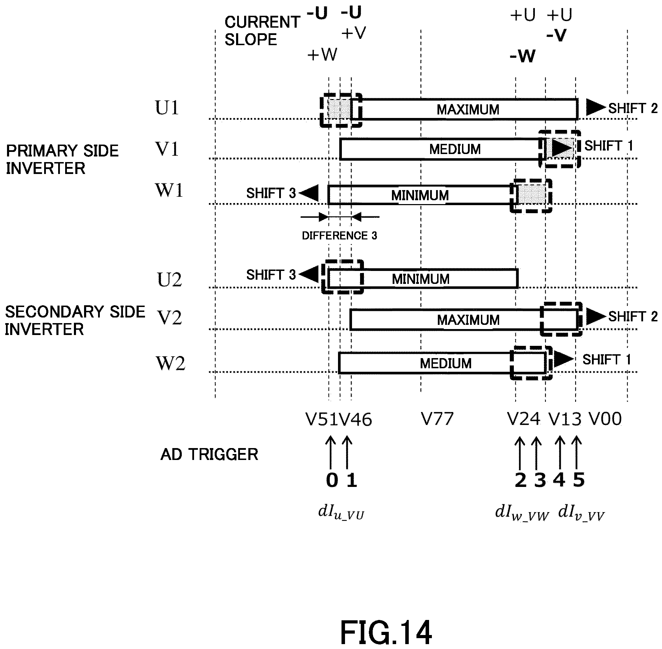

FIGs. 13 and 14 are enlarged views of FIG. 12 for sector 0. Focusing on the carrier period surrounded by the broken line, it can be seen that the U-phase in the first half of the carrier and the V-phase andW-phase in the second half of the carrier within the carrier period have the ON/OFF pattern in FIG. 1. By setting the A/D conversion triggers 0 to 5 based on the duty ratios at those times, current variations dIu_VU, dIv_VV, and dIw_VW from which a magnetic pole position can be detected are acquired. It should be noted that VU, VV, and VW are voltage vectors, and VU is one of V46, V31, V42, and V51, and VV is one of V13, V62, V53 and V64, and VW is one of V24, V15, V26 and V35, and they vary in accordance with the sector. The magnetic pole position θ is estimated by Equation (5) shown in FIG. 25.

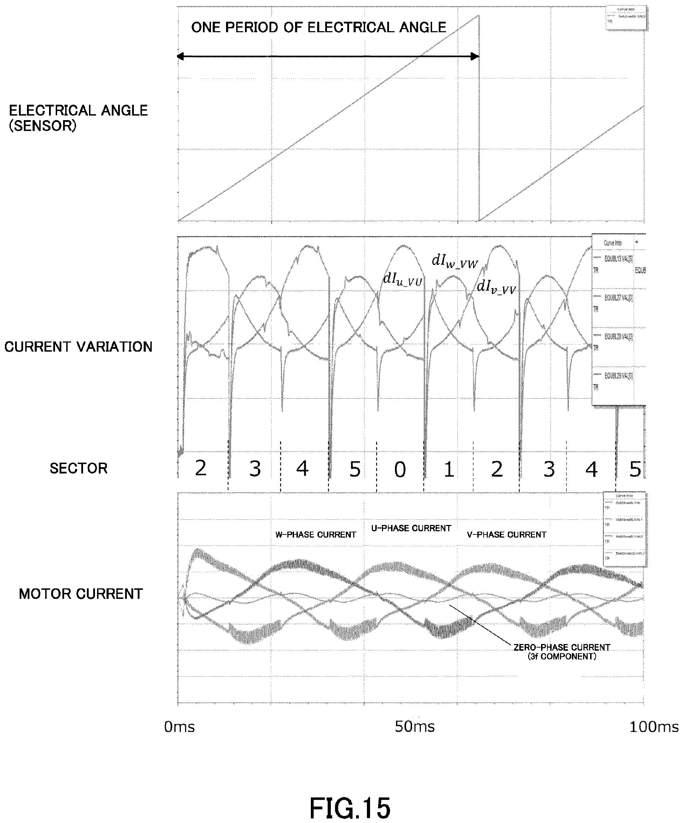

FIG. 15 shows current variations, motor current and zero-phase current against an electrical angle acquired through a simulation verification on the second embodiment. A current variation having a component of 2Θ against the electrical angle is acquired, and it can be seen that a magnetic pole position can be estimated therefrom. However, focusing on the PMW signals of the primary side and secondary side inverters in phases, since the mutual phase relationship among the PWM signals vary largely at a point where the sector is changed, it can be seen that a section exists where the current is distorted and a current variation cannot be detected accurately. Therefore, for the section after the sector is changed, interpolation may be performed based on the estimated speed and angle immediately before the sector is changed to mask the position estimation function.

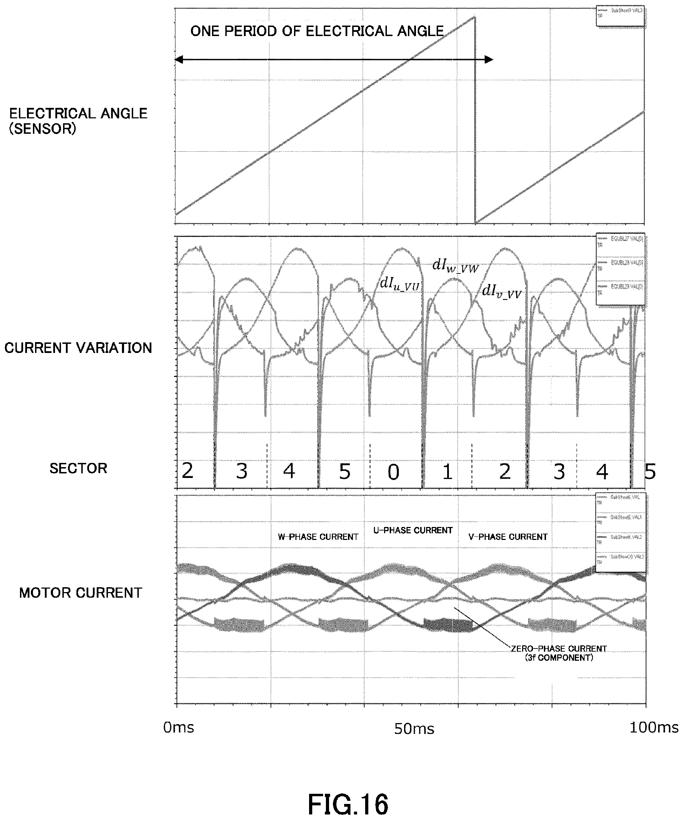

Note that, in the simulation above, like FIG. 6 of the first embodiment, the zero-phase current suppressing unit 17 which suppresses zero-phase current of the 3f component is not operated. FIG. 16 shows a simulation result in a case where the zero-phase current suppressing unit 17 is operated. Comparing with FIG. 15, it can be seen that the 3f component that is three times the fundamental frequency of the motor current is suppressed.

In this way, according to the second embodiment, the zero-phase current suppressing unit 17 suppresses zero-phase current flowing in the same direction through the three-phase wires of the motor 1 via paths between the primary side and secondary side inverters 2 and 3 and the motor 1. For 64 voltage vectors, which are combinations of ON/OFF patterns of the primary side and secondary side inverters 2 and 3, the PWM signal generating unit 22 divides a hexagonal spatial vector into six sectors, the hexagonal spatial vector having, as its center, a point where second switching patterns of V00, V77 are located and having, as its vertices, points where two first switching patterns are located.

For three-phase duty ratios of the primary side and secondary side inverters 2 and 3 of each sector, the phases are shifted by synchronizing between the primary side and the secondary side such that a time is provided for the current variation detecting unit 23 to detect a difference between current values of the three phases twice for each of a maximum, medium and minimum phases classified based on the magnitudes of the duty ratios. According to this configuration, a magnetic pole position θ can be estimated more precisely than the first embodiment.

### [Third Embodiment]

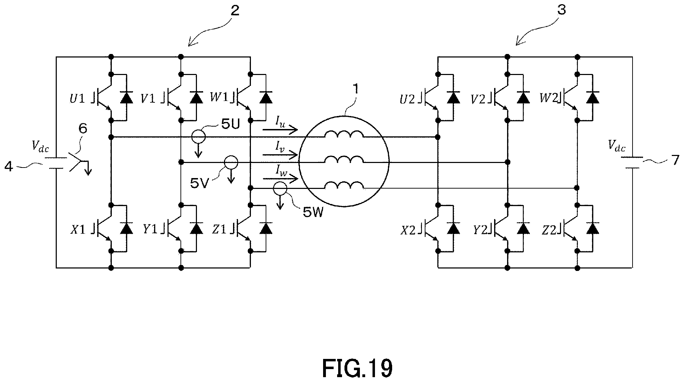

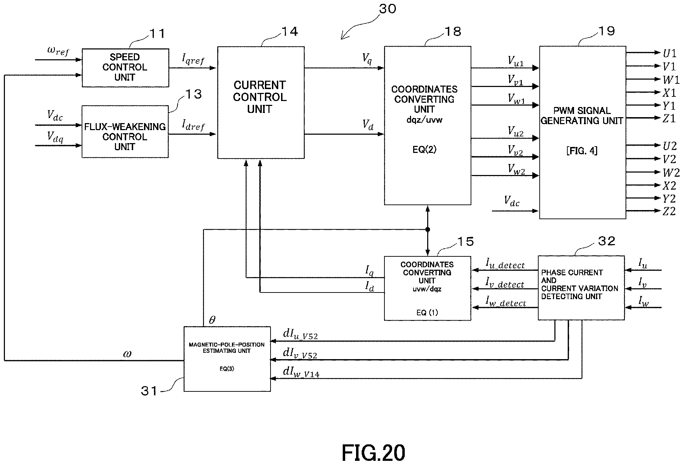

According to a third embodiment shown in FIG. 19, a direct-current power supply 4 is a power supply specially for the primary side inverter 2, and a secondary side inverter 3 is equipped with an independent direct-current power supply 7. In this configuration, since no zero-phase current flows between the primary side inverter 2 and the secondary side inverter 3, the zero-phase current suppressing unit 17 is omitted in a control device 30 shown in FIG. 20. Also, instead of the magnetic-pole-position estimating unit 12 and the phase current and current variation detecting unit 16, a magnetic-pole-position estimating unit 31 and a phase current and current variation detecting unit 32 are arranged. The current variation detecting unit 32 acquires a current variation dIv_V14 instead of the current variation dIw_V14 and outputs it to the magnetic-pole-position estimating unit 31.

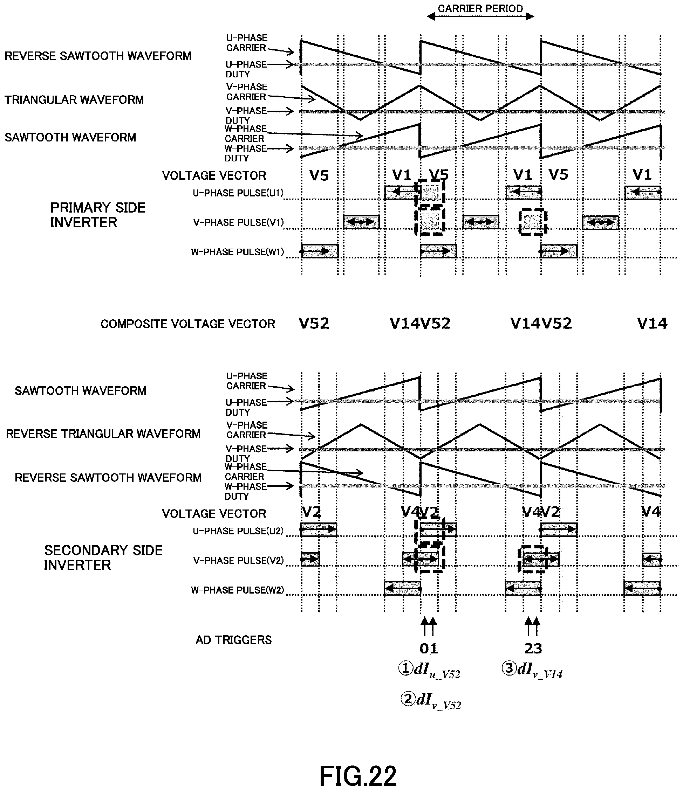

In the PMW signals of the primary side and secondary side inverters 2 and 3 shown in FIG. 22, an ON/OFF pattern from which a current variation is detected involves a V-phase pulses V1 and V2 instead of the W-phase pulses W1 and W2, and a current variation dIv_V14 is acquired with the A/D conversion triggers 2 and 3.

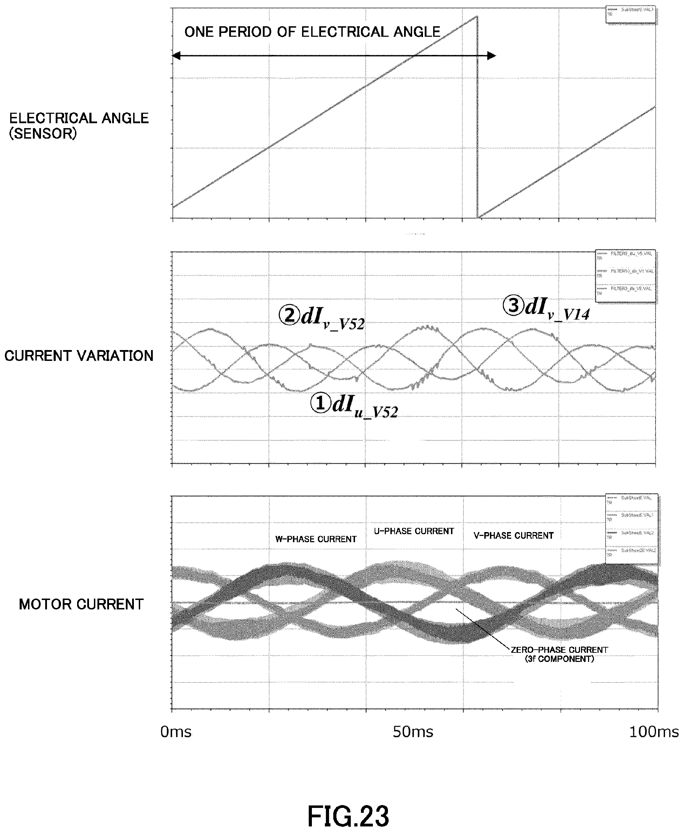

In the simulation result shown in FIG. 23, from the three current variations dIu_V52, dIv_V52, and dIv_V14, a current variation having a component of 2Θ against an electrical angle is acquired, and it can be seen that a magnetic pole position can be estimated.

While some embodiments of the present invention have been described, these embodiments have been presented by way of example only, and are not intended to limit the scope the disclosures herein. These inventive embodiments can be implemented in other various forms, and various omission, replacement and changes can be performed without departing from the spirit of the present invention. These embodiments and variations are included in the scope and spirit of the invention and are included in an equivalent range to the invention recited in claims.

## Claims

1. An open-winding motor drive device, comprising:
a primary side inverter having three-phase wires that are independent from each other and are connected to three output terminals of a motor having an open-winding structure including six output terminals;
a secondary side inverter connected to three remaining output terminals of the motor;
a current detecting unit that detects three-phase currents applied to the motor;
a current variation detecting unit that outputs a difference between values of the three-phase currents detected twice as a current variation;
a magnetic-pole-position estimating unit that estimates a magnetic pole position based on the current variation of the motor;
a control unit that controls current to be applied to the motor and a rotating speed;
a zero-phase current suppressing unit that suppresses zero-phase current flowing in the same direction through the three-phase wires of the motor via paths between the primary side and secondary side inverters and the motor; and
a PWM signal generating unit that compares three-phase duty ratios calculated based on a command voltage and a direct-current voltage acquired from the control unit and the zero-phase current suppressing unit with a carrier and generates three-phase PWM signals of each of the primary side and secondary side inverters,
wherein for 64 voltage vectors, which are combinations of ON/OFF patterns of the primary side and secondary side inverters, a hexagonal spatial vector is divided into six sectors, the hexagonal spatial vector having, as its center, a point where two second switching patterns are located and having, as its vertices, points where two first switching patterns are located, the second switching pattern not generating zero-phase voltage and not generating voltage that acts on between the phases of the motor, the first switching pattern not generating zero-phase voltage and generating voltage that acts on between the phases of the motor, and
for three-phase duty ratios of the primary side and secondary side inverters of each sector, the phases are shifted by synchronizing between the primary side and the secondary side such that a time is provided for the current variation detecting unit to detect a difference between current values of the three phases twice for each of a maximum, medium and minimum phases classified based on the magnitudes of the duty ratios.

2. An open-winding motor drive device, comprising:
a primary side inverter having three-phase wires that are independent from each other and are connected to three output terminals of a motor having an open-winding structure including six output terminals;
a secondary side inverter connected to three remaining output terminals of the motor;
a current detecting unit that detects three-phase currents applied to the motor;
a current variation detecting unit that outputs a difference between values of the three-phase currents detected twice as a current variation;
a magnetic-pole-position estimating unit that estimates a magnetic pole position based on the current variation of the motor;
a control unit that controls current to be applied to the motor and a rotating speed; and
a PWM signal generating unit that compares three-phase duty ratios calculated based on a command voltage and a direct-current voltage acquired from the control unit with a carrier and generates three-phase PWM signals of each of the primary side and secondary side inverters,
the PWM signal generating unit, a first phase of the three-phase PWM signals of the primary side inverter, increases and decreases its pulse width in both directions of a delay side and an advancing side with reference to a center or front or rear end of a carrier period,
for a second phase, increases and decreases its pulse width in one direction of a delay side or an advancing side with reference to the front or rear end of the carrier period,
for a third phase, increases and decreases its pulse width in opposite one direction with reference to the opposite phase to the second phase,
for a first phase of three-phase PWM signals of the secondary side inverter increases and decreases its pulse width in both directions of a delay side and an advancing side with reference to a phase different from a first phase of the primary side inverter, and
for a second phase and a third phase, increase and decrease their pulse widths in opposite directions with reference to the same phase as the second phase and the third phase of the primary side inverter, respectively, and
the current variation detecting unit detects twice a difference between three-phase or two-phase current values near a front end and a rear end of a carrier period.

3. The open-winding motor drive device according to claim 2, further comprising:
a first power supply that supplies a drive power supply to the primary side inverter; and
a second power supply that supplies a drive power supply to the secondary side inverter,
wherein the current variation detecting unit detects twice a difference between two-phase current values near a front end and a rear end of a carrier period.
